# EUROPEAN PATENT SPECIFICATION

(11) **EP 3 035 340 B1**
(45) Date of publication and mention of the grant of the patent: **04.10.2017**
(21) Application number: 14197928.6
(22) Date of filing: 15.12.2014
(51) Int. Cl.: G21F 9/04, G21F 9/06, G21F 9/28, G21F 9/30, B01D 21/00, B01D 24/00

(54) **Disposal device for disposing of particles underwater**
Entsorgungsvorrichtung zur Entsorgung von Partikeln unter Wasser
Dispositif d'élimination pour élimination de particules sous l'eau

(43) Date of publication of application: 22.06.2016
(73) Proprietor: AREVA Decomissioning and Services GmbH, 91058 Erlangen (DE)
(72) Inventor: Meierl, Hans-Peter, 91369 Wiesenthau (DE)
(74) Representative: Schlögl, Markus

(56) References cited:
- DE-B3-102012 214 853
- US-A- 5 001 870
- US-A1- 2012 118 835
- US-A1- 2014 352 268
- US-B1- 6 197 188

## Description

The invention relates to a disposal device for disposing particles underwater that originate from dismantling a component, in particular a component of a nuclear facility. The disposal device comprises a pumping device connected to a conduct that pumps a suspension of the particles to a container submerged in water for disposal. The invention also relates to a method for disposing particles underwater that originate from dismantling a component.

Dismantling of radioactive contaminated or radioactive activated components of nuclear power plants involves elaborate techniques to minimize the exposure of radiation to the environment or the dismantling personnel. The components are dismantled by means of various techniques including sawing, milling or other chip removing processes, eroding or abrasive jet stream cutting. In any case, large quantities of radioactive contaminated or radioactive activated particles that originate from the kerfs have to be disposed.
DE 10 2012 214 853 addresses this problem by providing a facility with a plurality of containers having filters that are connectable to an intake of the suspension via valves. Each container is connected to a pumping device arranged to draw the water that passed the filter.
It is an object of the present invention to improve the disposal of radioactive contaminated or radioactive activated particles so as to minimize the exposure or radiation to the environment or operating personnel.

This object is achieved by a disposal device of the afore-mentioned type with the characterizing features of claim 1.

Preferred embodiments are subject matter of the dependent claims.

A disposal device for disposing particles underwater, wherein the particles originate from dismantling a component, in particular from a dismantling operation of a component of a nuclear facility, comprises a pumping device that is connected to a conduct. The pumping device pumps a suspension of the particles to a container submerged in water. According to the invention, a distribution device is coupled to an inlet of the container, wherein said distribution device is adapted for distributing the flow of the suspension within the container.

The distribution device facilitates a uniform distribution of particles within the container. The distribution device may be designed to optimize the disposal of particles either by means of filtering or by means of sedimentation.

The container is preferably suited for final disposal in a nuclear repository.

Preferably, the disposal device is completely submerged in water to minimize the exposure of radiation to the surrounding and to the operating personnel. The disposal device may be submerged in a basin of the nuclear facility, in particular in a storage basin for spent fuel elements or in a reactor pool.

In one preferred embodiment, the distribution device of the disposal device has the shape of a bell. The bell-shaped distribution device may in particular be arranged on a container having an insert with a plurality of filter cartridges. The flow of a suspension including the particles is uniformly distributed amongst the plurality of filter cartridges by the bell-shaped distribution device. Preferably, the distribution device is disposable on the insert arranged within the container in a fluid-tight arrangement. The insert contains the filter cartridges. The fluid-tight arrangement allows for an increase of the pressure within the distribution device and the insert with respect to the hydrostatic pressure of the surrounding water, so that the flow of the suspension is forced to pass the filter cartridges.

Preferably, an inflatable seal is sufficiently pressurized to provide the fluid-tight arrangement of the distribution device on the insert.

In one preferred embodiment, a first pressure sensor adapted to measure an inner pressure within the inflatable seal is connected to a control device. The control device is adapted to control the pumping device with respect to the measured inner pressure within the inflatable seal. The inner pressure within the inflatable seal is monitored or at least checked in regular intervals. Pressure drops are interpreted as resulting from a leaking seal, so that the pumping device is halted to avoid a contamination of the surrounding water.

The disposal device preferably comprises a second pressure sensor adapted to measure an inner pressure within the distribution device. The second pressure sensor is connected to the control device that is adapted to control the pumping device with respect to the measured inner pressure within the distribution device. As the flow resistance in particular provided by the filter cartridges increases with increasing filling level, the second pressure sensor may be utilized as an indicator for filled cartridges. The control device is configured to automatically halt the pumping device when the measured inner pressure of the distribution device exceeds a predefined value, so that the insert containing the filter cartridges may be exchanged before they are damaged. In particular, the insert may be configured for final disposal in a nuclear repository.

In another preferred embodiment of the invention, the distribution device of the disposal device comprises a flow calming element for reducing the flow rate of the suspension. This arrangement is particularly suited for embodiments, wherein the disposal of particles within the container essentially occurs by means of gravity/sedimentation.

Preferably, the flow calming element comprises a cone-shaped part arranged on a base plate having at least one opening providing a back flow. In particular, the cone-shaped part may be welded to the base plate. The inlet for the suspension is arranged close to the narrow tip of the cone-shaped part. As the flow cross section increases as the flow passes the cone-shaped part, the flow rate and flow velocity decreases, so that the particles may be deposited in the container.

The at least one opening in the base plate is preferably covered by a fleece or a mesh having a suitable aperture size so as to at least minimize the amount of particles that are discharged into the surrounding water via the back flow.

Preferably, the flow calming element is adapted to reduce the flow rate of the suspension to that extent that the particles may be deposited in the container by means of sedimentation.

Alternatively or additionally, the distribution devices comprise at least one cyclonic separation device. Cyclonic separation device are particularly suited for deposition of particles that originate from abrasive jet stream cutting. In particular, smaller particles may be disposed at an increased rate by the cyclonic separation devices utilizing the centrifugal forces to separate the suspension.

The at least one cyclonic separation device is adapted to work while submerged in water. In one possible embodiment of the invention, the cyclonic separation device is in fluid communication with the back flow provided by the at least one opening in the base plate of the flow calming element. Hence, at least the part of the flow of the suspension including the smaller particles is reintroduced into the disposal device and the amount of particles escaping the disposal device is minimized.

The conduct is preferably connectable to a component of the disposal device, in particular the pumping device and/or the distribution device, by a coupling device to establish a fluid communication. The coupling device is adapted to be remote controlled so as to be connected and disconnected in particular when submerged in water. The capability to completely remote control the operation of the disposal device, including in particular the exchange of filled containers, ensures that the exposure of radiation to the operation personnel is minimized.

In another preferred embodiment, the disposal device comprises a skimmer adapted to draw in the suspension from region near the water surface. The skimmer is particularly suited for drawing wooden chips or other floating objects to the container for disposal. Accordingly, the skimmer is preferably combined with embodiments utilizing filter or filter cartridges.

Preferably, a level indication sensor with a mechanical oscillator is arranged so as to indicate a filling level. The level indication sensor is adapted to measure the vibrational properties of the mechanical oscillator. The latter change when the mechanical oscillator is at least partially enclosed by particles. Hence, the filling level may be derived from measured changes of the oscillatory behavior of the mechanical oscillator.

The container comprises preferably a bottom member having at least one opening that is covered by a fleece or mesh. The water may leave the container when the latter is taken out of the basin for final disposal. The mesh or the fleece has an aperture size that prevents the particles from escaping so that a contamination of the water in the basin may be avoided.

The aforementioned object is also achieved by a method for disposing particles underwater according to claim 18.

The method for disposing particles utilizes the disposal device as described herein before. In this regard, reference is made to the preceding description. A method for disposing particles underwater, wherein the particles originate from dismantling a component, in particular a component of a nuclear facility, utilizes the disposal device to dispose the particles in the container adapted for final disposal. The flow rate of the suspension is modified so as to facilitate the deposition of particles.

Preferably, the disposal device is submerged in the basin of the nuclear facility, in particular in the storage basin for spent fuel elements, before it is put into service. The surrounding water acts as a radiation shield so that the exposure of radiation to the environment that is caused by material originating from the kerfs may be minimized.

The particles preferably originate from dismantling a component of a nuclear facility by means of sawing, milling or other chip removing processes, eroding or jet stream cutting, in particular by means of abrasive jet stream cutting.

In the following, specific embodiments of the invention are described in detail with respect to the accompanied figures, wherein
- Fig. 1:: shows a disposal device according to a first embodiment of the invention,
- Fig. 2:: shows a disposal device according to a second embodiment of the invention,
- Fig. 3:: shows a disposal device according to a third embodiment of the invention and
- Fig. 4:: shows a disposal device according to a fourth embodiment of the invention.

Corresponding parts are indicated in all figures by the same reference numerals.

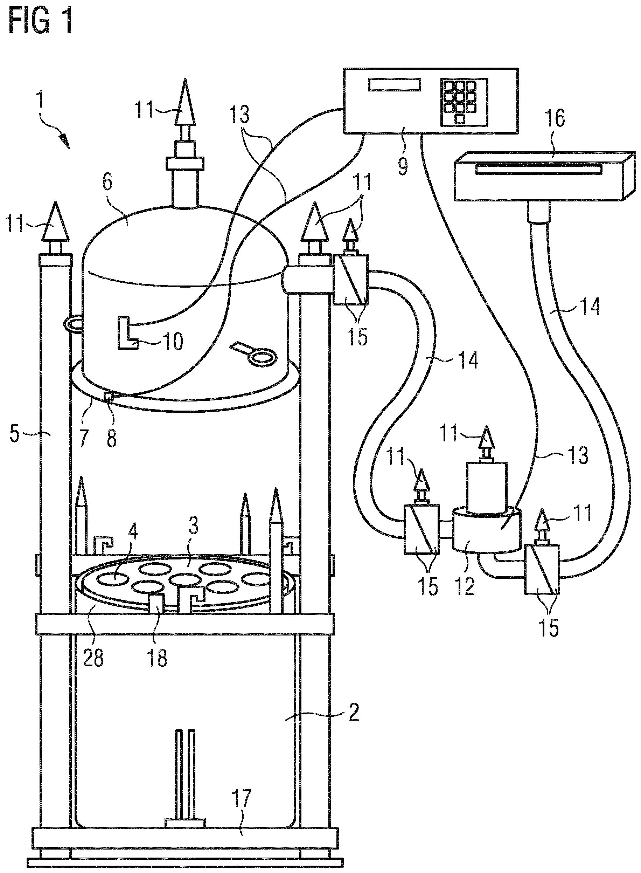

Figure 1 shows a disposal device 1 according to a first embodiment of the invention. The disposal device 1 is adapted to be submerged in water so as to minimize the exposure of radiation to the environment when radioactive contaminated particles are disposed. For this purpose, the disposal device 1 may be positioned on the bottom of a basin of a nuclear facility that is used as a storage basin for spent fuel elements.

The disposal device 1 comprises a container 2 that meets the requirements for final disposal of nuclear waste. The container 2 contains an insert 3 with a plurality of filter cartridges 4 for filtering a suspension containing the particles to be disposed. The filter cartridges 4 substantially have cylindrical shapes. The container 2 is arranged in a frame 5 that is a gapless welded construction made from austenitic profiles and comprises an electro-polished surface to facilitate decontamination. The container 2 is mounted to the frame 5 by several mounting devices 18 that are adapted to be remote-controlled. In particular, the mounting device 18 is adapted to engage and disengage the container 2 while submerged in the basin.

A bell-shaped distribution device 6 of the disposal device 1 is mounted to an upper part of the frame 6 and may be displaced in a vertical direction for placement onto the container 2 so as to couple the distribution device 6 to an inlet of the container 2.

The distribution device 6 of the first embodiment is disposable on the insert 3 in a fluid-tight arrangement so that the interior of distribution device 6 may be sufficiently pressurized to force the flow of the suspension through the cylindrical filter cartridges 4. The fluid-tight arrangement is provided by an inflatable seal 7 circumferentially surrounding a lower end of the bell-shaped distribution device 6. The flow of the suspension is directed towards an inner surface of the distribution device 1 that acts as a deflector for uniformly distributing the suspension among the filter cartridges 4.

The inflatable seal 7 is pressurized. The inner pressure of the inflatable seal 7 is monitored by a control device 9 that is connected to a first pressure sensor 8 for measuring the inner pressure of the inflatable seal 7. The control device 9 is connected to the first pressure sensor 8, a second pressure sensor 10 for measuring the pressure within the distribution device 2 and a pumping device 12 for pumping the suspension via wires 13. The control device 9 is adapted to control and activate the various components of the disposal device 1. In particular, the pumping device 12 is controlled with respect to the measured pressures. If the inner pressure of the inflatable seal 7 drops below a predefined threshold value, a leaking seal is indicated and the pumping device 12 is stopped before the surrounding water of the basin is contaminated by the emerging suspension. An increase of the inner pressure within the distribution device 6 above another predefined threshold value indicates full filter cartridges 4. Upon such an event, the pumping device 12 is automatically halted by the control device 9 to prevent the filter cartridges 4 from bursting.

The pumping device 12 and the distribution device 6 are connectable to flexible conducts 14 or hoses by coupling devices 15 to establish a fluid communication. The coupling devices 14 are adapted to be remote controlled and may be connected and disconnected to the pumping device 12 or the distribution device 6 while the whole arrangement is submerged in water.

The dispose device 1 is adapted to be placed and operated under water by means of manipulators that mechanically engage the various components of the disposal device 1. The process of disposing particles takes place in a depth of up to 10 meters below the water surface, so that a good visibility is crucial for the exact placement of the various components. The components of the disposal device 1, in particular the distribution device 6, the frame 5, the pumping device°12 and the coupling devices 15 comprise conical connecting elements 11 that are adapted to be mechanically engaged by the manipulator, in particular by a grappler.

A skimmer 16 is arranged at an intake for the suspension. The skimmer 16 is adapted to draw the suspension from a region near a water surface.

The disposal device 1 may be used for disposing particles originating from dismantling a component of the nuclear facility by means sawing, milling or other chip removing processes, eroding or abrasive jet stream cutting. The disposal device 1 is capable of depositing large quantities of particles under water, in particular depositing abrasive and material originating from the kerfs.

The conducts 14 are coupled via the coupling devices 15 to the pumping device 12 and the distribution device 6 while the arrangement is submerged in water. The distribution device 6 is lowered onto the top of the container 2. The pumping device 12 is activated and the suspension of the particles is drawn from the water or from a region near the water surface by the skimmer 16. The suspension is pressed through the filter cartridges 4 for filtering the particles. The filtered water may leave the container 2 via a circumferential gap located between a sidewall°28 of the container 2 and the insert 3. A part of the filtered water may also leave the container 2 via openings disposed in a bottom member 17. The openings in the bottom member 17 are covered by a fleece or mesh made from steel preventing the particles from leaving the container 2.

During operation, the inner pressure within the inflatable seal 7 and inner pressure within the bell-shaped distribution device 6 is constantly monitored. A drop of the inner pressure of the inflatable seal 7 indicates a leak, so that the pumping device 12 is automatically halted to prevent a contamination of the water surrounding the disposal device 1. Likewise, the pumping device 12 is automatically halted in case the filling level of the filter cartridges 4 approaches its maximum, the latter being indicated by the inner pressure within the distribution device 6 exceeding another predefined value with respect to the hydrostatic pressure of the surrounding water. After the distribution device 6 is lifted by means of the manipulator, the filled container 2 may be removed from the basin, whereby the water of the basin may escape via the openings located in the bottom member 17.

The distribution device 6 of the first embodiment is adapted to be fitted on top of the container 2 in a fluid-tight agreement so that an increased pressure may be exerted to force the flow of the suspension through the filter cartridges 4.

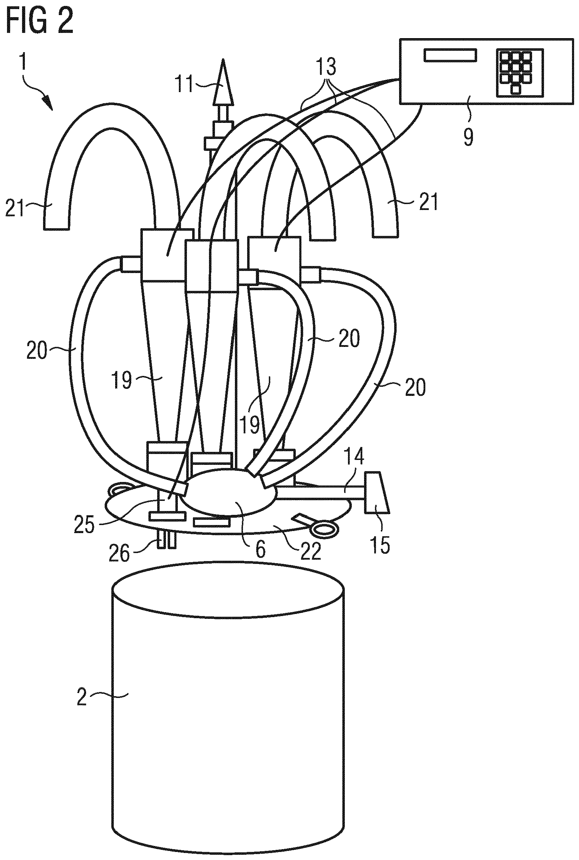

Figure 2 shows a second embodiment of the disposal device 1. The suspension is, similar to the embodiment illustrated in figure 1, transported to the container by the pumping device 12 connected to conducts 14 via remote-controllable coupling devices 15.

The disposal device 1 according to the second embodiment utilizes a plurality of cyclonic separation devices 19 adapted to be operated underwater. The pumping device 12 (not shown in figure 2) pumps the suspension to the distribution device 2. The distribution device 2 of the second embodiment is connected to a plurality of conducts 20. Hence, the suspension flow is distributed amongst the cyclonic separation devices 19 to optimize the disposal in particular for applications demanding a quick disposal of large amounts of particles, in particular including abrasive used for jet stream cutting.

In one possible embodiment, the cyclonic separation devices 19 are adapted to separate particles with diameters ranging between 12 µm and 18 µm from water. The capacity of each cyclonic separation device 19 of this embodiment ranges between 5.5 m³ and 13.5 m³ per hour.

The cyclonic separation devices 19 separate the particles to be disposed by utilizing the centrifugal force. The particles that leave the cyclonic separation device 19 via its lower end are deposited in the container 2. The water leaving the cyclonic separation device 19 via the u-shaped conductors 21 may contain residual amounts of particles. In particular, smaller particles of the suspension that are not separated by means of the cyclonic separation device 19 may be discharged into the water of the basin via the conducts 21

According to the second embodiment, the particles are deposited in the container 2 by means of sedimentation. In this case, an arrangement of filters within the container 2 can be omitted.

During operation of the disposal device 1, the container 2 is covered by a cover member 22 carrying a level indication sensor 25. The level indication sensor 25 comprises a mechanical oscillator 26 similar to a tuning fork that oscillates with its eigenfrequency. When the filling level in the container 2 raises to that extent that the ends of the mechanical oscillator 26 are enclosed by deposited particles, the oscillations of the mechanical oscillator 26 are dampened. The level indication sensor 25 is adapted to register the changed oscillation behavior to indicate a filled container 2. Upon registration of such an event, the control device 9 connected to the level indication sensor 25 automatically halts the pumping device 12 and the cyclonic separation devices 19.

Other features of the second embodiment, in particular with respect to the frame 5 mounting the container 2 and the distribution device 6 and/or the coupling devices 15, essentially correspond to the arrangement of the first embodiment. Accordingly, reference is made to the preceding description.

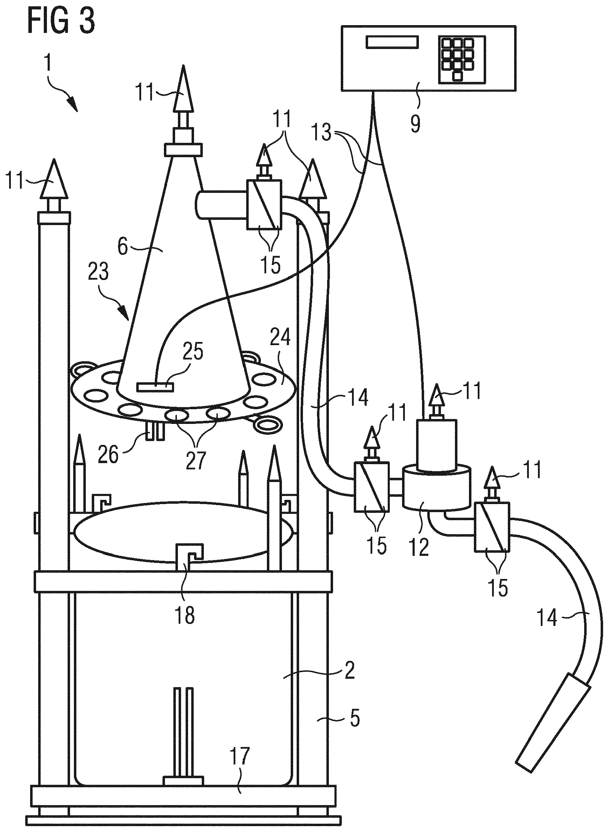

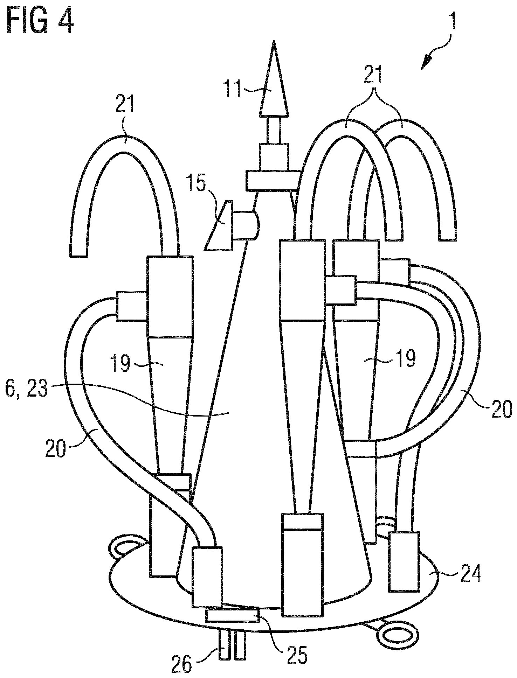

The embodiments illustrated in figures 3 and 4 also relate to the deposition of particles by means of gravity/sedimentation.

The distribution device 6 of the third embodiment shown in figure 3 comprises a flow calming element 23 that is designed to calm down the flow of the suspension before the inlet of the container 2 is reached. The aim is to reduce the flow rate of the suspension so as to facilitate the disposition of the particles by means of sedimentation. The disposal device 1 of the third embodiment ist particularly suited for the underwater deposition of relatively large particles, for example chips.

The flow calming element 23 has a cone-shaped part defining a flow-calming distance. The cone-shaped part is arranged on a base plate 24 and also supports a uniform disposal of the particles within the container 2. A plurality of openings 27 is disposed around a circumference of the base plate 24. The flow generated by the pumping device 12 may only exit via the openings 27 in the base plate 24 or via the openings disposed in the bottom member 17 of the container 2.

The openings 27 disposed in the base plate 24 allow for a back flow of water into the basin. The openings 27 disposed in the base plate 24 are covered by a mesh or fleece made from a metal to keep the particles within the container 2.

The fourth embodiment of the invention shown in figure 4 in principle relates to a preferred modification of the second embodiment shown in figure 2. Cyclonic separation devices 19 are arranged on the base plate 24 of the flow calming element 23 shown in figure 3. An inlet of each cyclonic separation device 19 is connected to the back flow by the conduct 20. As a result, the suspension flow at least has to pass the cone-shaped part of the flow calming element 23 and one of the cyclonic separation devices 19 before it may be expelled to the basin via the conducts 21. Consequently, the amount of particles that escape from the disposal device 1 may be further reduced.

The cyclonic separation devices 19 are configured to operate while submerged in water.

In one specific embodiment, the cyclonic separation devices 19 are adapted to separate particles with diameters that are larger than 5 µm to 15 µm. The capacities of the cyclonic separation devices range between 2.4 m³ and 7.6 m³ per hour.

The third and fourth embodiments also include the level indication sensor 25 described herein before with reference to figure 2.

The invention was described herein before with respect to preferred embodiments shown in the figures. However, it is understood that the invention is not limited to the illustrated embodiments. Rather, modifications and combinations in particular of the various features shown in the figures may be realized by a person of ordinary skill without departing from underlying concept of the present invention.

### Reference numerals

- 1: disposal device
- 2: container
- 3: insert
- 4: filter cartridge
- 5: frame
- 6: distribution device
- 7: seal
- 8: first pressure sensor
- 9: control device
- 10: second pressure sensor
- 11: connecting element
- 12: pumping device
- 13: wire
- 14: conduct
- 15: coupling device
- 16: skimmer
- 17: bottom member
- 18: mounting device
- 19: cyclonic separation device
- 20: conduct
- 21: conduct
- 22: cover member
- 23: flow calming element
- 24: base plate
- 25: level indication sensor
- 26: mechanical oscillator
- 27: opening
- 28: side wall

## Claims

1. Disposal device (1) for disposing particles underwater, said device comprising a container (2) having an inlet, a pumping device (12) and a conduct (14), said particles originating from dismantling a component, in particular a component of a nuclear facility, wherein the pumping device (12) connected to the conduct (14) is adapted to pump a suspension of the particles to the container (2) submerged in water, **characterized by** a distribution device (6) coupled to the inlet of the container (2), said distribution device (6) being adapted for distributing the flow of the suspension within the container (2).

2. Disposal device (1) according to claim 1, **characterized in that** the distribution device (6) has the shape of a bell.

3. Disposal device (1) according to claim 1 or 2, **characterized in that** the distribution device (6) is disposable on an insert (3) arranged within the container (2) in fluid-tight arrangement.

4. Disposal device (1) according to claim 3, **characterized in that** the fluid-tight arrangement is provided by an inflatable seal (7).

5. Disposal device (1) according to claim 4, **characterized in that** a first pressure sensor (8) adapted to measure an inner pressure within the inflatable seal (7) is connected to a control device (9), said control device (9) being adapted to control the pumping device (12) with respect to the measured inner pressure within the inflatable seal (7).

6. Disposal device (1) according to one of the previous claims, **characterized in that** a plurality of filter cartridges (4) is arranged within the container (2) or the insert (3).

7. Disposal device (1) according to claim 6, **characterized in that** a second pressure sensor (10) adapted to measure an inner pressure within the distribution device (6) is connected to a control device (9), said control device (9) being adapted to control the pumping device (12) with respect to the measured inner pressure within the distribution device.

8. Disposal device (1) according to claim 1, **characterized in that** the distribution device (6) comprises a flow calming element (23) for reducing the flow rate of the suspension.

9. Disposal device (1) according to claim 8, **characterized in that** the flow calming element (23) comprises a cone-shaped part arranged on a base plate (24) having at least one opening (27) providing a back flow.

10. Disposal device (1) according to claim 9, **characterized in that** the at least opening (27) of the base plate (24) is covered by a fleece or a mesh.

11. Disposal device (1) according to one of the claims 8 to 10, **characterized in that** the flow calming element (23) is adapted to reduce the flow rate of the suspension so as to allow for a disposal of the particles by means of sedimentation.

12. Disposal device (1) according to one of the previous claims, **characterized in that** the distribution device (6) comprises at least one cyclonic separation device (19).

13. Disposal device (1) according to claim 12, **characterized in that** an inlet of the at least one cyclonic separation device (19) is in fluid communication with the back flow of the flow calming element (23).

14. Disposal device (1) according to one of the previous claims, **characterized in that** the conduct (14) is connectable to a component (6, 12) of the disposal device (1) by a coupling device (15) to establish a fluid communication, said coupling device (15) being adapted to be remote controlled so as to be connected and disconnected in particular when submerged in water.

15. Disposal device (1) according to one of the previous claims, **characterized in that** the pumping device (12) is connected to a skimmer (16) adapted to draw in the suspension from region near the water surface.

16. Disposal device (1) according to one of the previous claims, **characterized in that** a level indication sensor (25) with a mechanical oscillator (26) is arranged so as to indicate a filling level.

17. Disposal device (1) according to one of the previous claims, **characterized in that** the container (2) comprises a bottom member (17) having at least one opening that is covered by a fleece or mesh.

18. Method for disposing particles underwater, said particles originating from dismantling a component, in particular a component of a nuclear facility, **characterized in that** the particles are disposed in a container (2) by means of a disposal device (1) according to one of the previous claims.

19. Method for disposing particles underwater according to claim 18, **characterized in that** the disposal device is submerged in a basin of a nuclear facility.

20. Method for disposing particles underwater according to claim 18 or 19, **characterized in that** the particles originate from dismantling a component of a nuclear facility by means of sawing, milling or other chip removing processes, eroding or jet stream cutting, in particular by means of abrasive jet stream cutting.

## Patentansprüche

1. Entsorgungseinrichtung (1) zum Entsorgen von Teilchen unter Wasser, wobei die Vorrichtung einen Behälter (2) mit einem Einlass, eine Pumpvorrichtung (12) und eine Leitung (14) umfasst, wobei die Teilchen beim Zerlegen eines Bauteils, insbesondere einer Komponente einer nuklearen Einrichtung, entstehen, wobei die mit der Leitung (14) verbundene Pumpvorrichtung (12) dazu ausgelegt ist, eine Suspension der Teilchen in den unter Wasser angeordneten Behälter (2) zu pumpen, **gekennzeichnet durch** eine mit dem Einlass des Behälters (2) gekoppelte Verteilereinrichtung (6) aufweist, welche Verteilereinrichtung (6) zur Verteilung des Flusses der Suspension innerhalb des Behälters (2) ausgebildet ist.

2. Entsorgungsvorrichtung (1) nach Anspruch 1, **dadurch gekennzeichnet, dass** die Verteilereinrichtung (6) die Form einer Glocke aufweist.

3. Entsorgungsvorrichtung (1) nach Anspruch 1 oder 2, **dadurch gekennzeichnet, dass** die Verteilereinrichtung (6) auf einem innerhalb des Behälters (2) angeordneten Einsatz (3) fluiddicht angeordnet ist.

4. Entsorgungsvorrichtung (1) nach Anspruch 3, **dadurch gekennzeichnet, dass** zur fluiddichten Anordnung eine aufblasbare Dichtung (7) vorgesehen ist.

5. Entsorgungsvorrichtung (1) nach Anspruch 4, **dadurch gekennzeichnet, dass** ein zur Messung eines Innendrucks innerhalb der aufblasbaren Dichtung (7) ausgebildeter erster Drucksensor (8) mit einer Steuereinrichtung (9) verbunden ist, wobei die Steuereinrichtung (9) dazu ausgebildet ist, die Pumpvorrichtung (12) in Abhängigkeit des innerhalb der aufblasbaren Dichtung (7) gemessenen Innendrucks zu steuern.

6. Entsorgungsvorrichtung (1) nach einem der vorhergehenden Ansprüche, **dadurch gekennzeichnet, dass** innerhalb des Behälters (2) oder des Einsatzes (3) mehrere Filterkartuschen (4) angeordnet sind.

7. Entsorgungsvorrichtung (1) nach Anspruch 6, **dadurch gekennzeichnet, dass** ein zur Messung eines Innendrucks innerhalb der Verteilereinrichtung (6) ausgebildeter ein zweiter Drucksensor (10) mit einer Steuereinrichtung (9) verbunden ist, wobei die Steuereinrichtung (9) dazu ausgebildet ist, die Pumpvorrichtung (12) in Abhängigkeit des innerhalb der Verteilungseinrichtung gemessenen Innendrucks zu steuern.

8. Entsorgungsvorrichtung (1) nach Anspruch 1, **dadurch gekennzeichnet, dass** die Verteilereinrichtung (6) ein Strömungsberuhigungselement (23) zur Verringerung der Strömungsgeschwindigkeit der Suspension aufweist.

9. Entsorgungsvorrichtung (1) nach Anspruch 8, **dadurch gekennzeichnet, dass** das Strömungsberuhigungselement (23) ein kegelförmiges Teil aufweist, das auf einer Grundplatte (24) angeordnet ist, welche mindestens eine einen Rückfluss breitstellende Öffnung (27) aufweist.

10. Entsorgungsvorrichtung (1) nach Anspruch 9, **dadurch gekennzeichnet, daß** die zumindest Öffnung (27) der Grundplatte (24) mit einem Vlies oder einem Gitter bedeckt ist.

11. Entsorgungsvorrichtung (1) nach einem der Ansprüche 8 bis 10, **dadurch gekennzeichnet, dass** das Strömungsberuhigungselement (23) dazu ausgebildet ist, die Strömungsgeschwindigkeit der Suspension zu reduzieren, um eine Entsorgung der Teilchen mittels Sedimentation zu ermöglichen.

12. Entsorgungsvorrichtung (1) nach einem der vorhergehenden Ansprüche, **dadurch gekennzeichnet, dass** die Verteilereinrichtung (6) zumindest eine Zyklonabscheideeinrichtung (19) aufweist.

13. Entsorgungsvorrichtung (1) nach Anspruch 12, **dadurch gekennzeichnet, dass** ein Einlaß der zumindest einen Zyklonabscheideeinrichtung (19) mit der Rückfluss des Strömungsberuhigungselements (23) in Fluidverbindung steht.

14. Entsorgungsvorrichtung (1) nach einem der vorhergehenden Ansprüche, **dadurch gekennzeichnet, dass** zur Herstellung einer Fluidverbindung die Leitung (14) mit einer Komponente (6, 12) der Entsorgungseinrichtung (1) mittels einer Kupplungseinrichtung (15) verbindbar ist, wobei die Kupplungseinrichtung (15) dazu ausgebildet ist, ferngesteuert verbunden und getrennt zu werden, insbesondere wenn sie in Wasser untergetaucht ist.

15. Entsorgungsvorrichtung (1) nach einem der vorhergehenden Ansprüche, **dadurch gekennzeichnet, dass** die Pumpeinrichtung (12) mit einem Skimmer (16) verbunden ist, der dazu geeignet ist, die Suspension aus einem Bereich nahe der Wasseroberfläche anzusaugen.

16. Entsorgungsvorrichtung (1) nach einem der vorhergehenden Ansprüche, **dadurch gekennzeichnet, dass** ein Füllstandsanzeigesensor (25) mit einem mechanischen Oszillator (26) zur Anzeige eines Füllstands vorgesehen ist.

17. Entsorgungsvorrichtung (1) nach einem der vorhergehenden Ansprüche, **dadurch gekennzeichnet, dass** der Behälter (2) ein Bodenstück (17) mit mindestens einer Öffnung aufweist, die von einem Vlies oder Gitter bedeckt ist.

18. Verfahren zur Entsorgung von Teilchen unter Wasser, wobei die Teilchen beim Zerlegen eines Bauteils, insbesondere einer Komponente einer nuklearen Einrichtung, entstehen, entstehen, **dadurch gekennzeichnet, dass** die Teilchen in einem Behälter (2) mittels einer Entsorgungseinrichtung (1) gemäß einem der vorherigen Ansprüche entsorgt wird.

19. Verfahren zur Entsorgung von Teilchen unter Wasser nach Anspruch 18, **dadurch gekennzeichnet, dass** die Entsorgungseinrichtung in einem Becken einer nuklearen Anlage untergetaucht ist.

20. Verfahren zur Entsorgung von Teilchen unter Wasser nach Anspruch 18 oder 19, **dadurch gekennzeichnet, dass** die Teilchen beim Zerlegen einer Komponente einer nuklearen Einrichtung durch Sägen, Fräsen oder andere zerspanende Verfahren, Erodieren oder Wasserstrahlschneiden, insbesondere durch Abrasivstrahlschneiden, entstehen.

## Revendications

1. Dispositif d'évacuation (1) pour évacuer des particules sous l'eau, ledit dispositif comprenant un conteneur (2) ayant un orifice d'entrée, un dispositif de pompage (12) et un conduit (14), lesdites particules provenant du démantèlement d'un composant, en particulier d'un composant d'une installation nucléaire, dans lequel le dispositif de pompage (12) branché au conduit (14) est adapté pour pomper une suspension des particules dans le conteneur (2) immergé dans l'eau, **caractérisé par** un dispositif de distribution (6) couplé à l'orifice d'entrée du conteneur (2), ledit dispositif de distribution (6) étant adapté pour distribuer le flux de la suspension au sein du conteneur (2).

2. Dispositif d'évacuation (1) selon la revendication 1, **caractérisé en ce que** le dispositif de distribution (6) a la forme d'une cloche.

3. Dispositif d'évacuation (1) selon la revendication 1 ou 2, **caractérisé en ce que** le dispositif de distribution (6) peut être disposé sur un insert (3) agencé au sein du conteneur (2) en un agencement étanche au fluide.

4. Dispositif d'évacuation (1) selon la revendication 3, **caractérisé en ce que** l'agencement étanche au fluide est fourni par un joint d'étanchéité gonflable (7).

5. Dispositif d'évacuation (1) selon la revendication 4, **caractérisé en ce qu'**un premier capteur de pression (8) adapté pour mesurer une pression intérieure au sein du joint d'étanchéité gonflable (7) est branché à un dispositif de commande (9), ledit dispositif de commande (9) étant adapté pour commander le dispositif de pompage (12) par rapport à la pression intérieure mesurée au sein du joint d'étanchéité gonflable (7).

6. Dispositif d'évacuation (1) selon l'une des revendications précédentes, **caractérisé en ce qu'**une pluralité de cartouches filtrantes (4) est agencée au sein du conteneur (2) ou de l'insert (3).

7. Dispositif d'évacuation (1) selon la revendication 6, **caractérisé en ce qu'**un second capteur de pression (10) adapté pour mesurer une pression intérieure au sein du dispositif de distribution (6) est branché à un dispositif de commande (9), ledit dispositif de commande (9) étant adapté pour commander le dispositif de pompage (12) par rapport à la pression intérieure mesurée au sein du dispositif de distribution.

8. Dispositif d'évacuation (1) selon la revendication 1, **caractérisé en ce que** le dispositif de distribution (6) comprend un élément d'atténuation de flux (23) pour réduire le débit de la suspension.

9. Dispositif d'évacuation (1) selon la revendication 8, **caractérisé en ce que** l'élément d'atténuation de flux (23) comprend une partie de forme conique agencée sur une plaque de base (24) ayant au moins une ouverture (27) fournissant un flux inverse.

10. Dispositif d'évacuation (1) selon la revendication 9, **caractérisé en ce que** l'au moins une ouverture (27) de la plaque de base (24) est couverte par un molleton ou un filet.

11. Dispositif d'évacuation (1) selon l'une des revendications 8 à 10, **caractérisé en ce que** l'élément d'atténuation de flux (23) est adapté pour réduire le débit de la suspension de façon à permettre une évacuation des particules par voie de sédimentation.

12. Dispositif d'évacuation (1) selon l'une des revendications précédentes, **caractérisé en ce que** le dispositif de distribution (6) comprend au moins un dispositif de séparation cyclonique (19).

13. Dispositif d'évacuation (1) selon la revendication 12, **caractérisé en ce qu'**un orifice d'entrée de l'au moins un dispositif de séparation cyclonique (19) est en communication fluidique avec le flux inverse de l'élément d'atténuation de flux (23).

14. Dispositif d'évacuation (1) selon l'une des revendications précédentes, **caractérisé en ce que** le conduit (14) peut être branché à un composant (6, 12) du dispositif d'évacuation (1) par un dispositif de couplage (15) pour établir une communication fluidique, ledit dispositif de couplage (15) étant adapté pour être télécommandé de façon à être branché et débranché en particulier lorsqu'il est immergé dans l'eau.

15. Dispositif d'évacuation (1) selon l'une des revendications précédentes, **caractérisé en ce que** le dispositif de pompage (12) est branché à un écumeur (16) adapté pour aspirer la suspension d'une région proche de la surface de l'eau.

16. Dispositif d'évacuation (1) selon l'une des revendications précédentes, **caractérisé en ce qu'**un capteur d'indication de niveau (25) avec un oscillateur mécanique (26) est agencé de façon à indiquer un niveau de remplissage.

17. Dispositif d'évacuation (1) selon l'une des revendications précédentes, **caractérisé en ce que** le conteneur (2) comprend un organe de fond (17) ayant au moins une ouverture qui est couverte par un molleton ou un filet.

18. Procédé d'évacuation de particules sous l'eau, lesdites particules provenant du démantèlement d'un composant, en particulier d'un composant d'une installation nucléaire, **caractérisé en ce que** les particules sont évacuées dans un conteneur (2) au moyen d'un dispositif d'évacuation (1) selon l'une des revendications précédentes.

19. Procédé d'évacuation de particules sous l'eau selon la revendication 18, **caractérisé en ce que** le dispositif d'évacuation est immergé dans un bassin d'une installation nucléaire.

20. Procédé d'évacuation de particules sous l'eau selon la revendication 18 ou 19, **caractérisé en ce que** les particules proviennent du démantèlement d'un composant d'une installation nucléaire par sciage, fraisage ou autres processus d'élimination de copeaux, érosion ou découpe par courant-jet, en particulier par découpe par courant-jet abrasif.
